# EUROPEAN PATENT SPECIFICATION

(11) **EP 0 963 153 B1**
(45) Date of publication and mention of the grant of the patent: **09.04.2003**
(21) Application number: 98957230.0
(22) Date of filing: 25.11.1998
(51) Int. Cl.: A01J 5/017, A01J 7/04

(54) **AN IMPLEMENT FOR MILKING ANIMALS**
VORRICHTUNG ZUM MELKEN VON TIEREN
DISPOSITIF POUR TRAIRE DES ANIMAUX

(30) Priority: 28.11.1997 NL 1007642
(43) Date of publication of application: 15.12.1999
(60) Divisional application: 02077630.8
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: NL9800669
(87) International publication number: WO99027770

(56) References cited:
- EP-A- 0 728 412
- EP-A- 0 789 995
- EP-A- 0 801 893
- WO-A-96/11568

## Description

The invention relates to an implement for milking animals as described in the preamble of claim 1.

Implements are known (e.g. from EP-A-0527509) in which the milking members are also used for pre-treatment of the teats of an animal to be milked. This has inter alia the disadvantage that the milking members are contaminated, so that they have to be cleaned before milking, which is a time-consuming and laborious process. Furthermore implements are known (e.g. from WO-A-97/15183) in which pre-treatment members are positioned with the aid of separate robot arms. Such implements are laborious and expensive. Finally implements are known (e.g. from EP-A-0882393) in which one single robot arm is used to position milking members and a pre-treatment member.

The invention aims at obviating the above-mentioned drawbacks and to provide an implement which on the one hand can be controlled in a simple and accurate manner and on the other hand is adapted to operate quickly and efficiently. According to the invention this is achieved by means of the measures mentioned in the characterizing part of claim 1 or claim 2 or claim 3. An implement having per robot arm one single milking member and a separate pre-treatment member can be controlled accurately and renders an efficient milking process possible. Moreover the robot arm is multifunctional and still compact. An implement having per robot arm at least two pre-treatment members enables a quick and efficient pre-treatment stage. Several robot arms having both a milking member and a pre-treatment member offer on the one hand the possibility of performing the pre-treatment stage and the subsequent milking stage in a flexible and efficient manner and have on the other hand the advantage that positioning of the milking members for the milking stage is very simple.

According to an inventive feature, at least one of said pre-treatment members is adapted to clean and/or to stimulate and/or to foremilk the relevant teat. According to a further inventive feature, at least one pre-treatment member is fastened to the robot arm so as to be movable relative to at least one milking member (e.g. in a manner in which it is rotatable or in which it is movable upwards and downwards). Because of this measure the pre-treatment member can be positioned during the milking stage so as not to form an obstacle. According to a further inventive feature, the relative movement of the pre-treatment member in relation to the milking member can be realized by means of a driving mechanism.

In accordance with a further inventive feature, the pre-treatment member is provided with a movable, substantially cylindrical or conical case that can be rotatable or movable in upward and downward direction and possibly capable of being driven. According to a further inventive feature, the inside of the case is provided with a profile that facilitates the pre-treatment of the teats. For that purpose the profile may extend substantially as a spiral. According to a further inventive feature, the inside of the case consists predominantly of a soft material, such as rubber or a soft synthetic material.

According to a further aspect of the invention, the pre-treatment member is provided at its lower side with a discharge opening. As a result thereof, material that has been used or has appeared during the pre-treatment of the teats can be discharged in a simple manner. According to a further inventive feature, the teat opening of the milking member and that of the pre-treatment member are located almost at the same level. This simplifies the positioning of the milking members for the milking stage.

In accordance with a further inventive feature, the pre-treatment member is provided with at least one supply line for cleaning and/or disinfecting fluid for the relevant teat. The pre-treatment member can be provided with a connecting piece for the supply line, said connecting piece being bearing-supported so as to be rotatable and/or slidable. Because of this measure the relative movement of the pre-treatment member in relation to the milking member can be carried out without encountering any problems.

According to a further inventive feature, the milking member is provided with means for detecting milk that is suitable for consumption and with means for discharging this consumable milk separately. According to another aspect of the invention, the milking robot comprises a control mechanism for the robot arms, which control mechanism is adapted to connect the pre-treatment members to the teats in a pre-treatment stage, and to connect the milking members to the teats in a subsequent milking stage.

In a preferred embodiment of the invention, the milking robot is provided with means for detecting the condition of the teats of an animal to be milked, while the control mechanism, depending on the detected condition, connects the pre-treatment members to the relevant teats. According to an aspect of the invention, the control mechanism, depending on the detected condition, regulates the sequence and/or the duration of the connection of the pre-treatment members to the teats. In this manner there can be applied a longer pre-treatment, e.g. in case of highly contaminated teats, while less contaminated teats can already be milked simultaneously. It is also possible first to connect the pre-treatment members to highly contaminated teats, while at the end of the pre-treatment stage the pre-treatment members can be disconnected almost simultaneously.

According to a further aspect of the invention, in the implement for milking animals the robot arms comprise at least one hingeable construction, such as a quadrangular hinge construction or a parallelogram construction, of which at least one hinge point is provided with a ball bearing. Such ball bearings enable the hingeable construction to carry out the movements imposed by the control mechanism of the milking robot more quickly. Moreover such bearings only need to be greased once.

In accordance with a further inventive feature, all hinge points of the hingeable construction are provided with ball bearings, so that the entire robot arm can move more quickly. According to a further inventive feature, at least one hinge point of the hingeable construction is provided with a clinometer for determining the orientation of the robot arm.

The invention will be explained in further detail with reference to the accompanying drawings.

Figure 1 is a side view of the implement for automatically milking animals;

Figure 2 is a plan view of the implement shown in Figure 1;

Figure 3 is a rear view of the implement of Figures 1 and 2;

Figure 4 is a schematic side view of a robot arm;

Figure 5 is a cross-section taken on the line V - V in Figure 4;

Figure 6 is a plan view of a detail of the robot arm of Figure 4 according to the arrow VI in the latter figure;

Figure 7 is a schematic cross-section taken on the line VII - VII in Figure 2, and

Figure 8 shows schematically another embodiment of the implement.

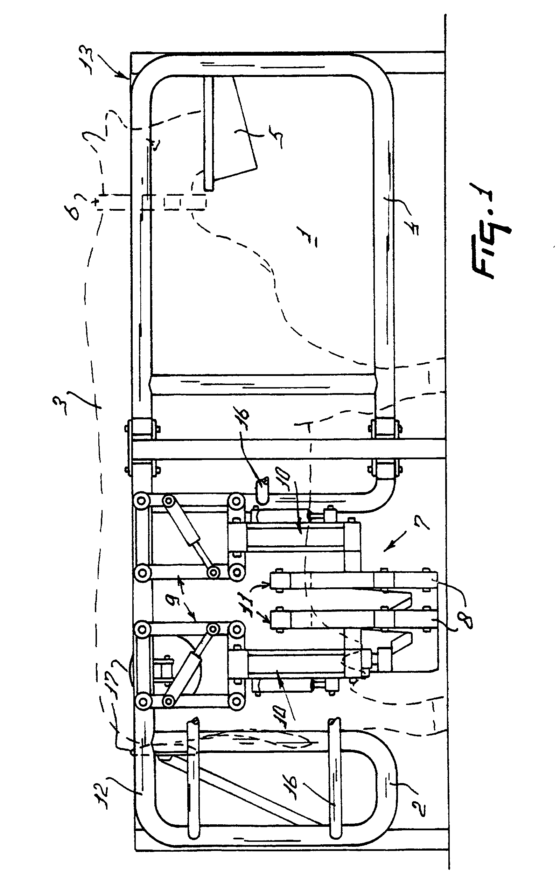

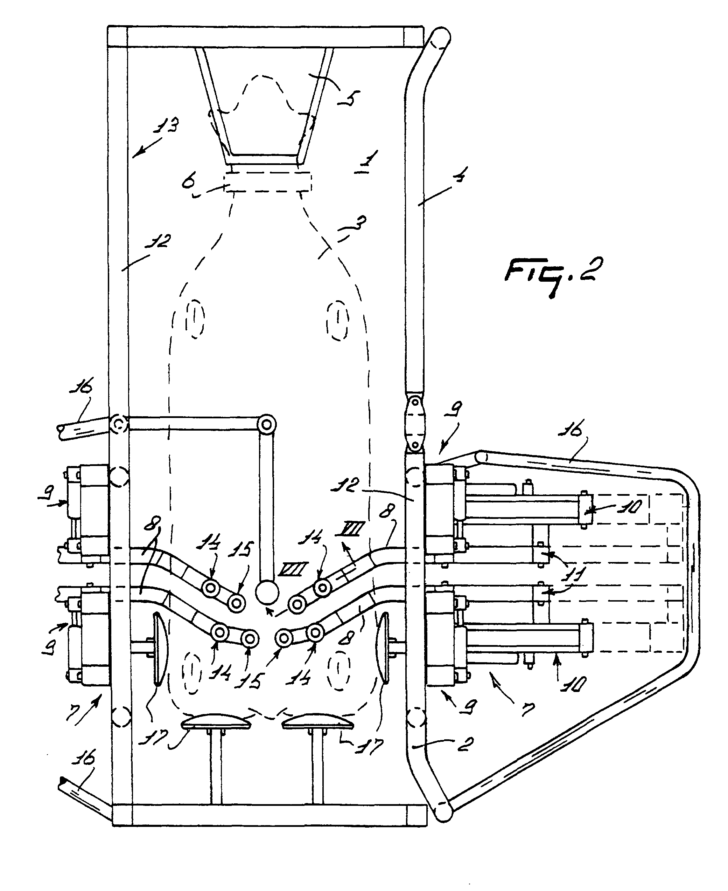

Figures 1, 2 and 3 are a side view, a plan view and a rear view respectively of the implement for automatically milking animals according to the invention. The implement comprises a milk stand in a milkbox 1 which is provided in longitudinal direction at one lateral side with an entrance door 2 via which an animal 3 to be milked can enter the milkbox 1, and an exit door 4 via which the animal 3 can leave the milkbox 1. In the front part of the milkbox 1 there is provided a feed trough 5 in which fodder, such as e.g. concentrate, can be fed to the animal 3 by means of a (non-shown) fodder metering system. The entrance door 2 and the exit door 4 can be operated automatically by means of a non-shown computer. The animal 3 is provided with a collar 6 with a transponder which is adapted to cooperate with a (non-shown) animal identification system, so that the animal 3 in the milkbox 1 can be automatically identified. Of course it is also possible to connect the transponder to the animal 3 in another manner, e.g. by injecting same.

The milkbox 1 further comprises a milking robot 7 having a number of (e.g. four) robot arms 8 for positioning means for treating the teats of the animal 3 to be milked. The robot arms 8 are each fastened to upper beams 12 of a frame 13 of the milkbox 1 by means of three hingeable constructions, such as e.g. parallelogram constructions 9, 10 and 11. The parallelogram constructions 9, 10 and 11 can be automatically controlled by means of non-shown control means and enable each of the robot arms 8 to carry out movements in three dimensions. The control means may comprise servo-pneumatic and/or servo-hydraulic cylinders (see Figures 1 - 3) and/or stepper motors.

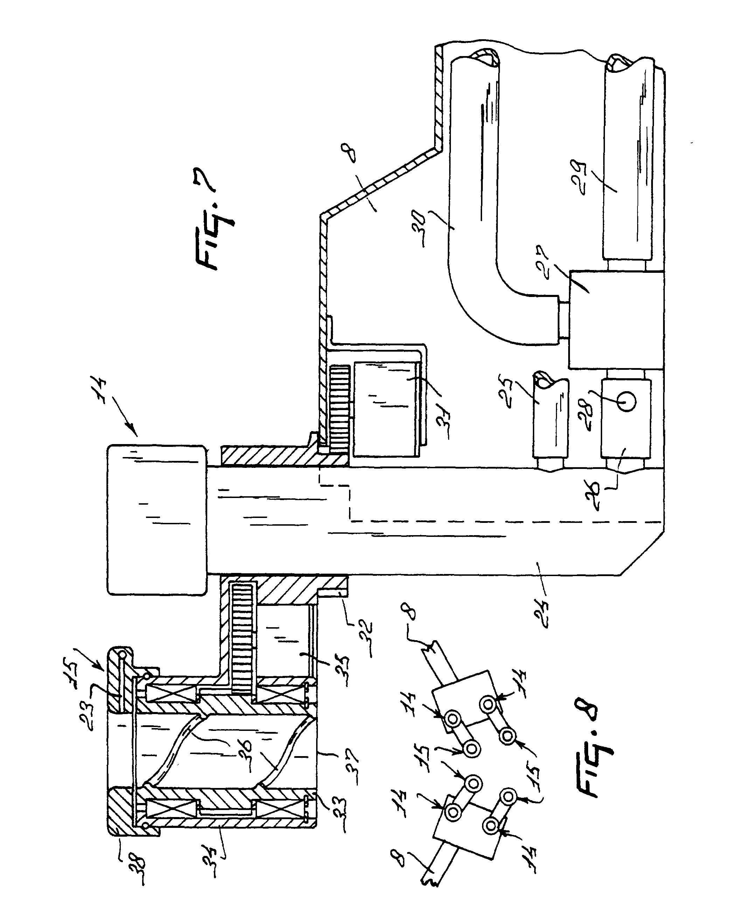

In the embodiment shown all four robot arms 8 are each provided with one milking member 14 and a separate pre-treatment member 15. Each milking member 14 is adapted to milk one of the teats of the animal 3 to be milked and comprises for that purpose a teat cup (known per se) for collecting and conveying the milk yielded, the inside of said teat cup being provided with pulsation means, as will be explained in further detail with reference to Figure 7. Each pre-treatment member 15 is adapted to clean and/or to stimulate and/or to foremilk one of the teats of the animal 3 to be milked, as will be explained in further detail, also with reference to Figure 7.

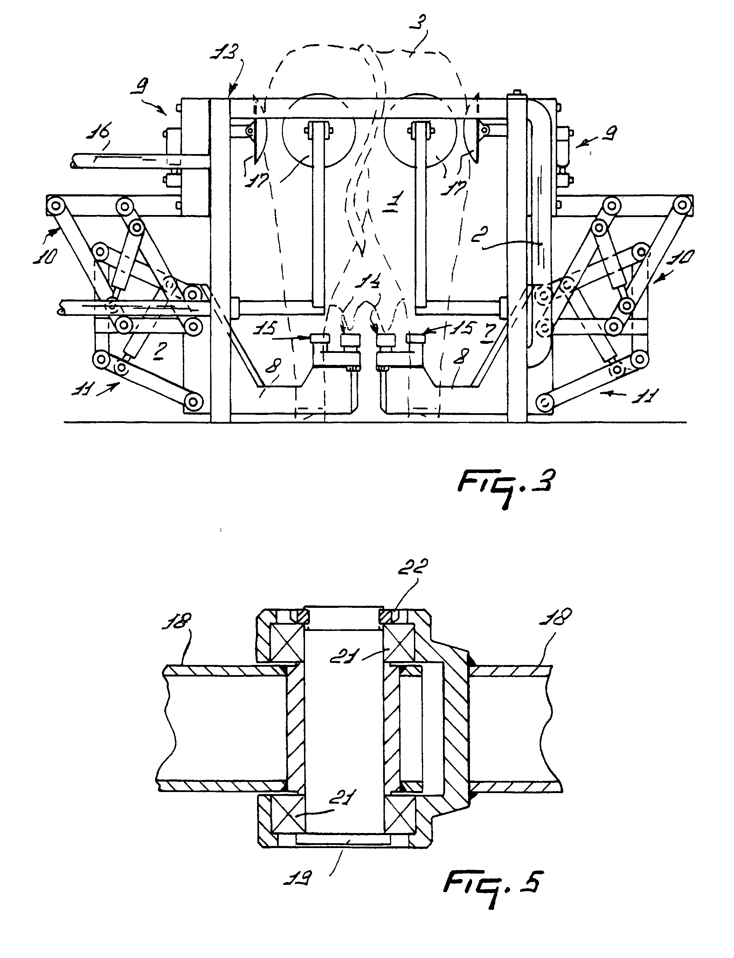

Protective brackets 16 (see Figure 2) ensure the protection of the parallelogram constructions 9, 10, 11 with the robot arms 8. The robot arms 8 are also provided with non-shown detectors for an accurate determination of the position of the teats of the animal 3 to be milked in relation to the relevant robot arms 8. The milkbox 1 is further provided with sensors 17 for determining the position of the animal 3 in relation to the milkbox 1. On the basis of this position, again with the aid of a non-shown computer, the control means are capable of post-controlling the milking members 14 and/or the pre-treatment members 15 for the purpose of tracking possible movements of the animal 3 in the milkbox 1. As shown, the four mechanical sensors 17 are located beside and behind the animal 3. For example with the aid of stepper motors, they are kept with an adjustable light pressure against the animal 3, so that they remain permanently in contact with the animal 3 and every movement can be tracked accurately. To that end the sensors 17 are connected to non-shown receiving elements which generate control signals for the control means of the parallelogram constructions 9, 10, 11.

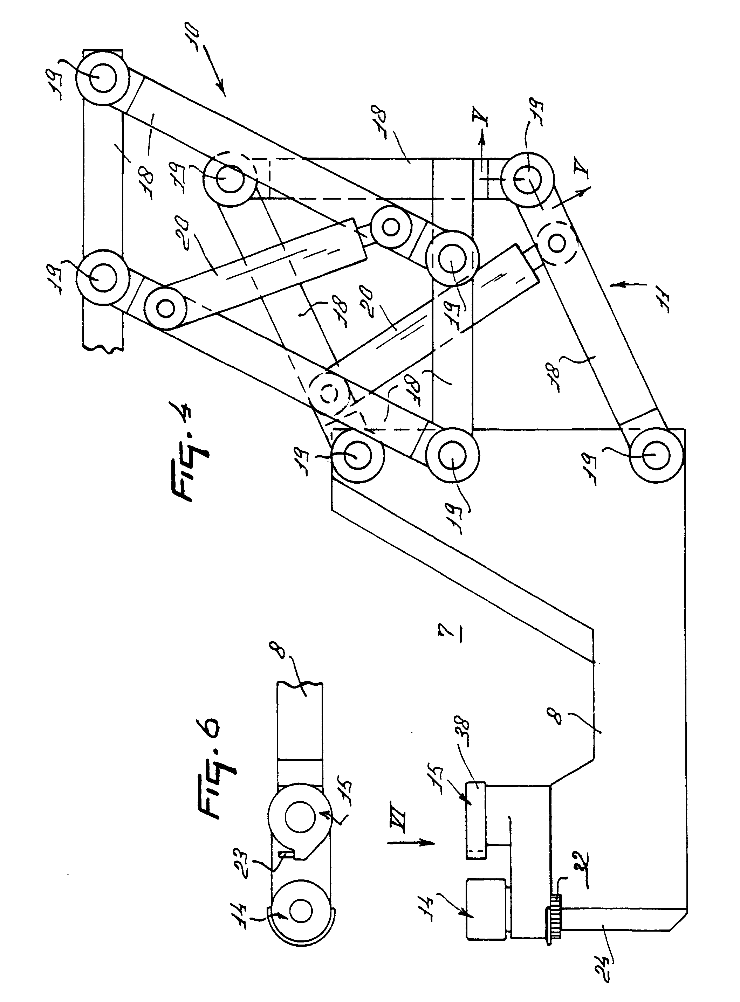

Figure 4 is a schematic side view of a robot arm in a milking position. The robot arm 8 is connected to the frame 13 of the milkbox 1 via the parallelogram constructions 11, 10 and 9 (non-shown in the present figure; see Figures 1 - 3). The parallelogram construction 9 ensures substantially the movement of the robot arm in the longitudinal direction of the milkbox 1. The parallelogram constructions 10 and 11 allow a movement perpendicular to said longitudinal direction and predominantly horizontal, vertical respectively.

The parallelogram constructions 9, 10 and 11 each comprise four arms 18 which are arranged in the shape of a parallelogram via hinge points 19. Furthermore controllable servo-pneumatic (and/or servo-hydraulic) cylinders 20 are hingeably fastened to two opposite sides of the parallelogram, in such a manner that the relevant parallelogram construction is movable by a movement of the piston in the cylinder 20.

At its end being the left-hand one in Figure 4, the robot arm 8 is provided with a milking member 14 and a separate pre-treatment member 15, the latter being fastened to the robot arm 8 so as to be movable relative to the milking member 14. In the embodiment shown the pre-treatment member 15 is rotatably disposed about a central axis of the almost cylindrical milking member 14, as will be explained in further detail with reference to Figure 7.

Figure 5 shows a cross-section taken on the line V - V in Figure 4. The hinge point 19 between the arms 18 of the parallelogram construction 11 is provided with ball bearings 21. Because of the small frictional forces in the ball bearings 21, the hinge point, and along therewith the entire parallelogram construction, can move more quickly, so that a quicker control of the milking robot 7 is possible. In Figure 5 the upper arm 18 is bearing-supported in the hinge point 19 by means of a central pin, represented as a horizontal one, which is bearing-supported in the ball bearings 21 and which is rigidly connected to the upper arm 18. For the purpose of determining the orientation of the robot arm 8, the hinge point 19 is further provided with a clinometer 22 that cooperates with the aforementioned pin. Consequently, a high degree of accuracy in the movement of the robot arm 8 can be obtained. Instead of the parallelogram constructions 9, 10, 11, there may also be used, of course, other hingeable constructions, such as quadrangular hinge constructions.

Figure 6 shows a plan view of a detail of the robot arm of Figure 4 according to the arrow VI in said figure. The milking member 14, which is substantially cylindrical, and the pre-treatment member 15, which is substantially cylindrical as well, are fastened to the robot arm 8 so as to be almost parallel to each other, the pre-treatment member 15 being rotatably disposed around the milking member 14 and being provided with a supply line 23 for cleaning and/or disinfecting fluid for the relevant teat. For the purpose of enabling a rotating movement of the pre-treatment member 15 around the milking member 14 without encountering any problems, the supply line 23 is provided with a connecting piece that is rotatably bearing-supported, as will be explained in further detail with reference to Figure 7.

Figure 7 is a schematic cross-section taken on the line VII - VII in Figure 2. The end of the robot arm 8 is provided with a milking member 14 and a separate pre-treatment member 15 which is fastened to the robot arm 8 so as to be movable (rotatably or slidably) relative to the milking member 14. In the embodiment shown the pre-treatment member 15 is rotatably disposed about a central axis of the substantially cylindrical milking member 14.

Each milking member 14 is adapted to milk one of the teats of the animal 3 to be milked and comprises for that purpose a teat cup 24 (known per se) for collecting and conveying the milk yielded, the inside of said teat cup 24 being provided with (non-shown) pulsation means, such as a flexible, transformable inner case which, with the aid of air-pressure changes produced by a pulsation line 25, alternately milks and releases the relevant teat. Via a milk line 26, in which there is a permanent vacuum (i.e. a lower pressure than the atmospheric pressure), the milk is discharged from the teat cup 24 to a valve 27 which, depending on a signal supplied by a milk quality sensor 28, guides the consumable milk into the production milk line 29 and the other substances (such as e.g. foremilk if any or cleaning fluid) into the residue line 30.

A motor 31 (e.g. a stepper motor) is adapted to drive an annular sleeve 32 that is rotatably bearing-supported around the teat cup 24, to which annular sleeve 32 the pre-treatment member 15 is fastened. Each of the pre-treatment members 15 is adapted to clean and/or to stimulate and/or to foremilk one of the teats of the animal 3 to be milked. To that end the pre-treatment member 15 is provided with a movable, substantially cylindrical or conical case 33. This case 33 is movable in upward and downward direction or, like in the embodiment shown, rotatably bearing-supported in the housing 34 of the pre-treatment member 15 and drivable with the aid of a motor 35 (e.g. a stepper motor).

For the purpose of improving the cleaning and/or the stimulating process of the teat, the inside of the case 33 is provided with a profile 36 which extends substantially as a spiral. The inside of the case 33 preferably consists of a soft material, such as rubber or a soft synthetic material. The lower side of the pre-treatment member 15 is provided with a discharge opening 37 via which cleaning and/or disinfecting fluid and/or foremilk if any can be discharged without the milking member 14 being contaminated. The teat opening of the milking member 14 and that of the pre-treatment member 15 are located almost at the same level.

The supply line 23 for cleaning and/or disinfecting fluid is provided with a connecting piece 38 which is rotatably bearing-supported and whose orientation at a rotation of the pre-treatment member 15 around the milking member 14 remains almost equal. Of course, in the situation of a slidable pre-treatment member 15, the connecting piece 38 can be bearing-supported so as to be slidable as well, in order to avoid problems with the supply line 23 at a sliding movement of the pre-treatment member 15.

In Figure 7 the robot arm 8 is shown in a pre-treatment position: the teat can be pre-treated in the pre-treatment member 15. When the pre-treatment stage has ended, in the subsequent milking stage the milking member 14 is connected to the relevant teat by the control mechanism. After the pre-treatment member 15 has been disconnected from the teat, said pre-treatment member 15 is rotated away by means of the motor 31, whereafter the robot arm 8 brings the milking member 14 to the place that was previously occupied by the pre-treatment member 15. This positioning is very simple because of the fact that the position of the pre-treatment member 15 is already known. By rotating the pre-treatment member 15 away, the latter is prevented from forming an obstacle in the milking stage and e.g. from obstructing the other robot arms 8. In Figures 4 and 6 the robot arm 8 is shown in a milking position: the pre-treatment member 15 has been rotated away and the teat can be milked in the milking member 14. For the purpose of assuming the pre-treatment position, the pre-treatment member 15 is pivoted back into the position shown in Figure 7 by means of the motor 31.

Figure 8 shows schematically another embodiment of the implement. Two robot arms 8 are each provided with two milking members 14 and two separate pre-treatment members 15. This embodiment has the advantage that the pre-treatment stage can be performed quickly. The control is simple because of the fact that there are provided only two robot arms 8. Moreover the movable pre-treatment members 15 enable a highly accurate and quick positioning.

The implement according to the invention makes it possible to perform the pre-treatment stage quickly and efficiently while making use of simple means. Furthermore the pre-treatment stage and the milking stage for different teats can be performed in a different manner and be attuned to the specific conditions. Moreover, because of the mutual movability of the pre-treatment member 15 and the milking member 14, the robot arms 8 are compact and not unnecessarily large in size.

## Claims

1. An implement for milking animals, which implement comprises a milking robot (7) including a number of robot arms (8), **characterized in that** at least one robot arm (8) is provided with one single milking member (14) and at least one separate pre-treatment member (15).

2. An implement for milking animals, which implement comprises a milking robot (7) including a number of robot arms (8), **characterized in that** at least one robot arm (8) is provided with at least one milking member (14) and at least two separate pre-treatment members (15).

3. An implement for milking animals, which implement comprises a milking robot (7) including a number of robot arms (8), **characterized in that** at least two robot arms (8) are each provided with at least one milking member (14) and at least one separate pre-treatment member (15).

4. An implement as claimed in any one of claims 1 - 3, **characterized in that** the pre-treatment member(s) (15) is/are adapted to clean and/or to stimulate and/or to foremilk the relevant teat.

5. An implement as claimed in any one of claims 1 - 4, **characterized in that** at least one pre-treatment member (15) is fastened to the robot arm (8) so as to be movable relative to at least one milking member (14).

6. An implement as claimed in claim 5, **characterized in that** the pre-treatment member (15) is fastened to the robot arm (8) so as to be rotatable or movable in upward and downward direction.

7. An implement as claimed in any one of claims 5 or 6, **characterized in that** the relative movement of the pre-treatment member (15) in relation to the milking member (14) can be realized by means of a driving mechanism (31).

8. An implement as claimed in any one of claims 1 - 7, **characterized in that** the pre-treatment member (15) is provided with a movable, substantially cylindrical or conical case (33).

9. An implement as claimed in claim 8, **characterized in that** the case (33) is rotatable or movable in upward and downward direction.

10. An implement as claimed in any one of claims 8 or 9, **characterized in that** the case (33) is drivable.

11. An implement as claimed in any one of claims 8 - 10, **characterized in that** the inside of the case (33) is provided with a profile (36).

12. An implement as claimed in claim 11, **characterized in that** the profile (36) extends substantially as a spiral.

13. An implement as claimed in any one of claims 8 - 12, **characterized in that** the inside of the case (33) consists predominantly of a soft material, such as rubber or a soft synthetic material.

14. An implement as claimed in any one of claims 1 - 13, **characterized in that** the lower side of the pre-treatment member (15) is provided with a discharge opening (37).

15. An implement as claimed in any one of claims 1 - 14, **characterized in that** the teat opening of the milking member (14) and that of the pre-treatment member (15) are located almost at the same level.

16. An implement as claimed in any one of claims 1 - 15, **characterized in that** the pre-treatment member (15) is provided with at least one supply line (23) for cleaning and/or disinfecting fluid for the relevant teat.

17. An implement as claimed in claim 16, **characterized in that** the pre-treatment member (15) is provided with a connecting piece (38) for the supply line (23), said connecting piece being bearing-supported so as to be rotatable and/or slidable.

18. An implement as claimed in any one of claims 1 - 17, **characterized in that** the milking member (14) is provided with means (28) for detecting milk that is suitable for consumption and with means (27, 29, 30) for discharging this consumable milk separately.

19. An implement as claimed in any one of claims 1 - 18, **characterized in that** the milking robot (7) comprises a control mechanism for the robot arms (8), which control mechanism is adapted to connect the pre-treatment members (15) to the teats in a pre-treatment stage, and to connect the milking members (14) to the teats in a subsequent milking stage.

20. An implement as claimed in claim 19, **characterized in that** the milking robot (7) comprises means for detecting the condition of the teats of an animal (3) to be milked, while the control mechanism, depending on the detected condition, connects the pre-treatment members (15) to the relevant teats.

21. An implement as claimed in claim 20, **characterized in that** the control mechanism, depending on the detected condition, regulates the sequence and/or the duration of the connection of the pre-treatment members (15) to the teats.

22. An implement as claimed in any one of claims 1 - 21, **characterized in that** the robot arms (8) comprise at least one hingeable construction (9, 10, 11), such as a quadrangular hinge construction or a parallelogram construction, of which at least one hinge point (19) is provided with a ball bearing (21).

23. An implement as claimed in claim 22, **characterized in that** all hinge points (19) of the hingeable construction (9, 10, 11) are provided with ball bearings (21).

24. An implement as claimed in claim 22 or 23, **characterized in that** at least one hinge point (19) of the hingeable construction (9, 10, 11) is provided with a clinometer (22) for determining the orientation of the robot arm (8).

## Patentansprüche

1. Vorrichtung zum Melken von Tieren, wobei die Vorrichtung einen Melkroboter (7) mit einer Anzahl von Roboterarmen (8) umfaßt,
**dadurch gekennzeichnet, daß** mindestens ein Roboterarm (8) mit einem einzelnen Melkglied (14) und mindestens einem separaten Vorbehandlungsglied (15) versehen ist.

2. Vorrichtung zum Melken von Tieren, wobei die Vorrichtung einen Melkroboter (7) mit einer Anzahl von Roboterarmen (8) umfaßt,
**dadurch gekennzeichnet, daß** mindestens ein Roboterarm (8) mit mindestens einem Melkglied (14) und mindestens zwei separaten Vorbehandlungsgliedern (15) versehen ist.

3. Vorrichtung zum Melken von Tieren, wobei die Vorrichtung einen Melkroboter (7) mit einer Anzahl von Roboterarmen (8) umfaßt,
**dadurch gekennzeichnet, daß** mindestens zwei Roboterarme (8) jeweils mit mindestens einem Melkglied (14) und mindestens einem separaten Vorbehandlungsglied (15) versehen sind.

4. Vorrichtung nach einem der Ansprüche 1 bis 3,
**dadurch gekennzeichnet, daß** das/die Vorbehandlungsglied(er) geeignet ist/sind, die betreffende Zitze zu reinigen und/oder zu stimulieren und/oder vorzumelken.

5. Vorrichtung nach einem der Ansprüche 1 bis 4,
**dadurch gekennzeichnet, daß** mindestens ein Vorbehandlungsglied (15) an dem Roboterarm (8) derart angebracht ist, daß es relativ zu mindestens einem Melkglied (14) bewegbar ist.

6. Vorrichtung nach Anspruch 5,
**dadurch gekennzeichnet, daß** das Vorbehandlungsglied (15) an dem Roboterarm (8) derart angebracht ist, daß es drehbar oder nach oben und unten bewegbar ist.

7. Vorrichtung nach einem der Ansprüche 5 oder 6,
**dadurch gekennzeichnet, daß** die relative Bewegung des Vorbehandlungsgliedes (15) relativ zu dem Melkglied (14) mit Hilfe eines Antriebsmechanismus (31) realisiert werden kann.

8. Vorrichtung nach einem der Ansprüche 1 bis 7,
**dadurch gekennzeichnet, daß** das Vorbehandlungsglied (15) mit einem beweglichen, im wesentlichen zylindrischen oder konischen Gehäuse (33) versehen ist.

9. Vorrichtung nach Anspruch 8,
**dadurch gekennzeichnet, daß** das Gehäuse (33) drehbar oder nach oben und unten bewegbar ist.

10. Vorrichtung nach einem der Ansprüche 8 oder 9,
**dadurch gekennzeichnet, daß** das Gehäuse (33) antreibbar ist.

11. Vorrichtung nach einem der Ansprüche 8 bis 10,
**dadurch gekennzeichnet, daß** das Innere des Gehäuses (33) mit einem Profil (36) versehen ist.

12. Vorrichtung nach Anspruch 11,
**dadurch gekennzeichnet, daß** sich das Profil (36) im wesentlichen in Form einer Spirale erstreckt.

13. Vorrichtung nach einem der Ansprüche 8 bis 12,
**dadurch gekennzeichnet, daß** das Innere des Gehäuses (33) im wesentlichen aus einem weichen Material, wie z. B. Gummi oder einem weichen Kunststoff, besteht.

14. Vorrichtung nach einem der Ansprüche 1 bis 13,
**dadurch gekennzeichnet, daß** die Unterseite des Vorbehandlungsgliedes (15) mit einer Auslaßöffnung (37) versehen ist.

15. Vorrichtung nach einem der Ansprüche 1 bis 14,
**dadurch gekennzeichnet, daß** die Zitzenöffnung des Melkgliedes (14) und die des Vorbehandlungsgliedes (15) nahezu in derselben Höhe angeordnet sind.

16. Vorrichtung nach einem der Ansprüche 1 bis 15,
**dadurch gekennzeichnet, daß** das Vorbehandlungsglied (15) mit mindestens einer Zuführleitung (23) für Reinigungs- und/oder Desinfektionsflüssigkeit für die jeweilige Zitze versehen ist.

17. Vorrichtung nach Anspruch 16,
**dadurch gekennzeichnet, daß** das Vorbehandlungsglied (15) mit einem Verbindungsstück (38) für die Zuführleitung (23) versehen ist, wobei das Verbindungsstück derart gelagert und gehalten ist, daß es drehbar und/oder verschiebbar ist.

18. Vorrichtung nach einem der Ansprüche 1 bis 17,
**dadurch gekennzeichnet, daß** das Melkglied (14) mit einer Vorrichtung (28) zum Ermitteln von für den Verzehr geeigneter Milch und mit Vorrichtungen (27, 29, 30) zum separaten Ableiten dieser verzehrbaren Milch versehen ist.

19. Vorrichtung nach einem der Ansprüche 1 bis 18,
**dadurch gekennzeichnet, daß** der Melkroboter (7) einen Steuermechanismus für die Roboterarme (8) umfaßt, wobei der Steuermechanismus geeignet ist, in einer Vorbehandlungsstufe die Vorbehandlungsglieder (15) an die Zitzen anzuschließen und in einer darauffolgenden Melkstufe die Melkglieder (14) an die Zitzen anzuschließen.

20. Vorrichtung nach Anspruch 19,
**dadurch gekennzeichnet, daß** der Melkroboter (7) eine Vorrichtung zum Ermitteln des Zustandes der Zitzen eines zu melkenden Tieres (3) umfaßt, wobei der Steuermechanismus in Abhängigkeit von dem ermittelten Zustand die Vorbehandlungsglieder (15) an die entsprechenden Zitzen anschließt.

21. Vorrichtung nach Anspruch 20,
**dadurch gekennzeichnet, daß** der Steuermechanismus in Abhängigkeit von dem ermittelten Zustand die Reihenfolge und/oder die Dauer des Anschlusses der Vorbehandlungsglieder (15) an die Zitzen regelt.

22. Vorrichtung nach einem der Ansprüche 1 bis 21,
**dadurch gekennzeichnet, daß** die Roboterarme (8) mindestens eine Schwenkvorrichtung (9, 10, 11), wie z. B. eine Viergelenk-Schwenkvorrichtung oder eine Parallelogrammführung, umfassen, bei denen mindestens ein Gelenkpunkt (19) mit einem Kugellager (21) versehen ist.

23. Vorrichtung nach Anspruch 22,
**dadurch gekennzeichnet, daß** alle Gelenkpunkte (19) der Schwenkvorrichtung (9, 10, 11) mit Kugellagern (21) versehen sind.

24. Vorrichtung nach Anspruch 22 oder 23,
**dadurch gekennzeichnet, daß** mindestens ein Gelenkpunkt (19) der Schwenkvorrichtung (9, 10, 11) mit einem Klinometer (22) zur Ermittlung der Ausrichtung des Roboterarmes (8) versehen ist.

## Revendications

1. Dispositif pour la traite des animaux, lequel dispositif comprend un robot de traite (7) comprenant un certain nombre de bras de robot (8), **caractérisé en ce qu'**au moins un bras de robot (8) est muni d'une seule unité de traite (14) et d'au moins une unité de pré-traitement séparée (15).

2. Dispositif pour la traite des animaux, lequel dispositif comprend un robot de traite (7) comprenant un certain nombre de bras de robot (8), **caractérisé en ce qu'**au moins un bras de robot (8) est muni d'au moins une unité de traite (14) et d'au moins deux unités de pré-traitement séparées (15).

3. Dispositif pour la traite des animaux, lequel dispositif comprend un robot de traite (7) comprenant un certain nombre de bras de robot (8), **caractérisé en ce qu'**au moins deux bras de robot (8) sont chacun muni d'au moins une unité de traite (14) et d'au moins une unité de pré-traitement séparée (15).

4. Dispositif selon l'une quelconque des revendications 1 à 3, **caractérisé en ce que** le(s) unité(s) de pré-traitement (15) est/sont adaptée(s) pour nettoyer et/ou stimuler et/ou recueillir les premiers jets du trayon à traire.

5. Dispositif selon l'une quelconque des revendications 1 à 4, **caractérisé en ce qu'**au moins une unité de pré-traitement (15) est fixée au bras de robot (8) de façon à pouvoir se déplacer par rapport à au moins une unité de traite (14).

6. Dispositif selon la revendication 5, **caractérisé en ce que** l'unité de pré-traitement (15) est fixée au bras de robot (8) de façon à pouvoir tourner ou se déplacer vers le haut et vers le bas.

7. Dispositif selon l'une quelconque des revendications 5 ou 6, **caractérisé en ce que** le mouvement relatif de l'unité de pré-traitement (15) par rapport à l'unité de traite (14) peut être réalisé au moyen d'un mécanisme d'entraînement (31).

8. Dispositif selon l'une quelconque des revendications 1 à 7, **caractérisé en ce que** l'unité de pré-traitement (15) est munie d'un boîtier amovible substantiellement cylindrique ou conique (33).

9. Dispositif selon la revendication 8, **caractérisé en ce que** le boîtier (33) peut être tourné ou déplacé vers le haut et vers le bas.

10. Dispositif selon l'une quelconque des revendications 8 ou 9, **caractérisé en ce que** le boîtier (33) peut être piloté.

11. Dispositif selon l'une quelconque des revendications 8 à 10, **caractérisé en ce que** l'intérieur du boîtier (33) est muni d'un profil (36).

12. Dispositif selon la revendication 11, **caractérisé en ce que** le profil (36) s'étend substantiellement à la façon d'une spirale.

13. Dispositif selon l'une quelconque des revendications 8 à 12, **caractérisé en ce que** l'intérieur du boîtier (33) consiste essentiellement en un matériau mou tel que du caoutchouc ou qu'un matériau synthétique mou.

14. Dispositif selon l'une quelconque des revendications 1 à 13, **caractérisé en ce que** le côté inférieur de l'unité de pré-traitement (15) est muni d'une ouverture d'écoulement (37).

15. Dispositif selon l'une quelconque des revendications 1 à 14, **caractérisé en ce que** l'ouverture pour le trayon de l'unité de traite (14) et celle de l'unité de pré-traitement (15) sont situées presque au même niveau.

16. Dispositif selon l'une quelconque des revendications 1 à 15, **caractérisé en ce que** l'unité de pré-traitement (15) est munie d'au moins une ligne d'alimentation (23) pour nettoyer et/ou désinfecter le fluide pour le trayon à traire.

17. Dispositif selon la revendication 16, **caractérisé en ce que** l'unité de pré-traitement (15) est munie d'une pièce de connexion (38) pour la ligne d'alimentation (23), ladite pièce de connexion étant supportée par roulement de façon à pouvoir tourner et/ou coulisser.

18. Dispositif selon l'une quelconque des revendications 1 à 17, **caractérisé en ce que** l'unité de traite (14) est munie d'un moyen (28) pour détecter le lait qui est propre à la consommation et d'un moyen (27, 29, 30) pour décharger séparément ce lait consommable.

19. Dispositif selon l'une quelconque des revendications 1 à 18, **caractérisé en ce que** le robot de traite (7) comprend un mécanisme de commande pour les bras de robot (8), lequel mécanisme de commande est adapté pour raccorder les unités de pré-traitement (15) aux mamelons lors d'une étape de pré-traitement et pour raccorder les unités de traite (14) aux trayons lors d'une étape suivante de traite.

20. Dispositif selon la revendication 19, **caractérisé en ce que** le robot de traite (7) comprend un moyen pour détecter la condition des trayons d'un animal (3) à traire, tandis que le mécanisme de commande, en fonction de la condition détectée, raccorde les unités de pré-traitement (15) aux trayons à traire.

21. Dispositif selon la revendication 20, **caractérisé en ce que** le mécanisme de commande, en fonction de la condition détectée, régule le cycle et/ou la durée du raccordement des unités de pré-traitement (15) aux trayons.

22. Dispositif selon l'une quelconque des revendications 1 à 21, **caractérisé en ce que** les bras de robot (8) comprennent au moins une construction articulée (9, 10, 11) telle qu'une construction articulée quadrangulaire ou qu'une construction en parallélogramme sur laquelle au moins un point d'articulation (19) est muni d'un roulement à billes (21).

23. Dispositif selon la revendication 22, **caractérisé en ce que** tous les points d'articulation (19) de la construction articulée (9, 10, 11) sont munis de roulements à billes (21).

24. Dispositif selon la revendication 22 ou 23, **caractérisé en ce qu'**au moins un point d'articulation (19) de la construction articulée (9, 10, 11)est muni d'un inclinomètre (22) pour déterminer l'orientation du bras de robot (8).
